# EUROPÄISCHE PATENTSCHRIFT

(11) **EP 0 403 693 B1**
(45) Veröffentlichungstag und Bekanntmachung des Hinweises auf die Patenterteilung: **03.02.1993**
(21) Anmeldenummer: 89120452.1
(22) Anmeldetag: 04.11.1989
(51) Int. Cl.: B23B 31/28

(54) **Vorrichtung zum Erzeugen eines Stelldrehmomentes für ein Bewegungswandlungssystem, insbesondere zum Verstellen der Backen eines Futters oder der von ihnen ausgeübten Spannkraft**
Device for obtaining a moment for a movement converting system, specially for adjusting jaws of a chuck or their clamping force
Dispositif pour obtenir un couple pour un système de conversion de mouvement, spécialement pour l'ajustement des mors d'un mandrin ou de la force de serrage

(30) Priorität: 23.06.1989 DE 3920612
(43) Veröffentlichungstag der Anmeldung: 27.12.1990
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 033 908
- EP-A- 0 234 230

## Beschreibung

Die Erfindung betrifft eine Vorrichtung zum Erzeugen eines Stelldrehmomentes für ein Bewegungswandlungssystem, insbesondere zum Verstellen der Backen eines Futters oder der von ihnen ausgeübten Spannkraft, mit einer zum Umlauf antreibbaren Arbeitsspindel einer Werkzeugmaschine und einer in der hohlen Arbeitsspindel verstellbar angeordneten Stellstange, wobei das Bewegungswandlungssystem an der Arbeitsspindel mitumlaufend angeordnet ist, zwei koaxial zur Arbeitsspindel angeordnete, zur Betätigung des Bewegungswandlungssystems in entgegengesetzten Drehrichtungen relativ zueinander verdrehbare Stellräder vorgesehen sind und im Antriebsstrang zwischen diesen Stellrädern und einem stationär angeordneten Stellmotor ein Umlauf-Ausgleichsgetriebe angeordnet ist, das die Drehbewegung oder das Drehmoment des Stellmotors auf die beiden Stellräder verzweigt.

Bei einer aus DE 37 37 190 A1 bekannten Vorrichtung dieser Art sitzt das eine Stellrad fest auf der Arbeitsspindel und das andere Stellrad fest auf der drehbar in der Arbeitsspindel gelagerten Stellstange, deren Drehbewegung im Futter in die radiale Backenbewegung umgesetzt wird. Derartige Bewegungswandlungssysteme sind daher nicht für Vorrichtungen mit axial zu betätigender Stellstange geeignet. Durch die feste Verbindung des einen Stellrades mit der Arbeitsspindel wird bei Ausübung eines Stelldrehmoments die Arbeitsspindel durch das Reaktionsstelldrehmoment beaufschlagt. Das Ausgleichsgetriebe ist als ein zweistufiges Gleichlaufgetriebe nach Art eines Vorgelegegetriebes ausgebildet, dessen Zentralräder durch zwei auf der Vorgelegewelle drehfest angeordnete Vorgelegeräder gleichlaufend gekoppelt sind, wobei die drehbar um die Zentralräder gelagerte Vorgelegewelle lastabhängig am Abtriebsglied einer dem Stellmotor nachgeschalteten Drehmomentkupplung abgestützt ist. Der elektrische Stellmotor läuft im Normalbetrieb stets mit gleicher Drehzahl und Drehrichtung um, wobei durch selbsttätiges Verdrehen der Vorgelegewelle um die Hauptwelle des Vorgelegegetriebes der Gleichgewichtszustand zwischen dem von der Drehmomentkupplung übertragenen Drehmoment und der aufgebrachten Spannkraft hergestellt wird.

Bei einer aus der DE 32 18 083 C2 bekannten Vorrichtung ist als Bewegungswandlungssystem ein Schraubgetriebe vorgesehen, mit dem die eingeleitete Drehbwegung in eine Axialbewegung umgesetzt wird, welche der in der hohlen Antriebsspindel axial verstellbar geführten Stellstange mitgeteilt wird. Der elektrische Stellmotor besitzt einen mit der Arbeitsspindel ständig umlaufenden Rotor, der zur Ausübung des Stelldrehmoments durch Änderung des Motorstroms beschleunigt oder gebremst wird. Das dabei am Bewegungswandlungssystem entstehende Reaktionsstelldrehmoment ist über die Arbeitsspindel und ihren Drehantrieb an stationären Bauteilen abgestützt, um den das Bewegungswandlungssystem verstellenden Kraftfluß zu schließen. Zum Erzeugen eines bestimmten Stelldrehmoments müssen dem Stellmotor unterschiedliche elektrische Leistungen zugeführt werden, je nach dem, auf welchem Punkt im Motorkennlinienfeld bei der jeweiligen Drehzahl der Arbeitsspindel gerade gearbeitet wird, denn mit der Spindeldrehzahl wandert der Arbeitspunkt entsprechend im Kennlinienfeld des Stellmotors. Diese Abhängigkeit von der Spindeldrehzahl wird unter Verwendung eines Kraft- oder Positionsregelkreises ausgeregelt, in dem der Stellmotor als Stellgröße unter Berücksichtigung der als Störgrößen bewerteten Drehwinkel und/oder Drehzahlen der Arbeitsspindel gesteuert ist.

Der Erfindung liegt die Aufgabe zugrunde, eine Vorrichtung der eingangs genannten Art so auszubilden, daß das Bewegungswandlungssystem unmittelbar eine axial verstellbare Stellstange zu betätigen ermöglicht, ohne daß sich die Ausübung des Stelldrehmoments auf die Arbeitsspindel auswirkt, und daß die zur Erzeugung eines bestimmten Stelldrehmoments benötigte Ansteuerung des Stellmotors von der Drehzahl der Arbeitsspindel unabhängig ist und daher das Stelldrehmoment in eindeutiger Weise ohne Rgelprozeß allein durch eine jeweils vorgegebene Ansteuerung des Stellmotors bestimmt ist.

Diese Aufgabe wird nach der Erfindung dadurch gelöst, daß die relativ zur Arbeitsspindel verdrehbaren Stellräder in Triebverbindung mit an der Arbeitsspindel drehbar und axial unverschiebbar gelagerten, achsenparallel und exzentrisch zur Achse der Arbeitsspindel angeordneten Spanngewindespindeln stehen, die mit ihrem Spanngewinde in an der axial verstellbaren Stellstange vorgesehenen Gewindeaufnahmen laufen, wobei die mit dem einen Stellrad in Triebverbindung stehenden Spanngewindespindeln umgekehrten Gewindesinn wie die mit dem anderen Stellrad in Triebverbindung stehenden Spanngewindespindeln aufweisen.

Durch diese Anordnung wird zunächst erreicht, daß die beiden Stellräder die drehende Stellbewegung über die Spanngewindespindeln unmittelbar in eine axiale Stellbewegung der Stellstange umsetzen und bezüglich der Einleitung des Stelldrehmoments in das Bewegungswandlungssystem wie auch der Abstützung des Reaktionsstelldrehmoments völlig symmetrisch arbeiten, es also eines weiteren Abstützorgans nicht bedarf. Am einen Stellrad wirkt das Stelldrehmoment, am anderen das Reaktionsstelldrehmoment, und umgekehrt. Insbesondere bleibt die Arbeitsspindel von dem Stell- oder Reaktionsstellrehmoment unbelastet, da beide Stellräder auf der Arbeitsspindel drehbar gelagert sind. Zwar nehmen in jedem Fall die Stellräder an der Drehung der Arbeitsspindel teil, jedoch wird wegen des Symmetrieverhältnisses die Drehung der beiden Stellräder im Ausgleichsgetriebe vollständig gegeneinander aufgehoben, so daß das Antriebsglied des Ausgleichsgetriebes auch bei laufender Arbeitsspindel still steht, so lange nicht die beiden Stellräder zur Betätigung des Bewegungswandlungssystems relativ gegeneinander verstellt werden und der Stellmotor entsprechend angesteuert wird. Wie daher auch immer der Stellmotor beschaffen sein mag, sein sich bei der Ansteuerung des Stellmotors verstellendes und das Antriebsglied des Ausgleichsgetriebes betätigendes Motorteil ist von der Drehung der Arbeitsspindel immer vollständig entkoppelt. Der Stellmotor braucht daher keinen Rotor zu besitzen, sondern kann sehr einfachen Aufbau aufweisen, beispielsweise auch eine Zylinder-Kolbenanordnung sein, die über Zahnstange und Ritzel das Antriebsglied des Ausgleichsgetriebes soweit verdreht, wie es für die gegenläufige Relativverstellung beider Stellräder auf der stillstehenden oder sich drehenden Arbeitsspindel erforderlich ist, um das Stelldrehmoment in der gewünschten Größe zu erhalten. Weiter ist auch das Stelldrehmoment von der Drehzahl der Arbeitsspindel völlig unabhängig. Änderungen der Spindeldrehzahl lassen den Stellmotor gänzlich unbeeinflußt, so daß das an den Stellrädern wirksame Stelldrehmoment allein durch die Ansteuerung und Verstellung des Stellmotors und nicht auch noch durch die Spindeldrehzahl bestimmt ist. Alle Regelungsvorgänge zur Erhaltung eines bestimmten Stelldrehmomentes unabhängig von der Drehzahl der Arbeitsspindel sind im Ergebnis entbehrlich.

Aus Symmetriegründen empfiehlt es sich, daß jeweils zwei der Spanngewindespindeln mit gleichem Gewindesinn sich diametral an der Arbeitsspindel gegenüberstehen, und daß in Umfangsrichtung der Arbeitsspindel die Spanngewindespindeln mit entgegengesetztem Drehsinn abwechseln. Eine besonders zweckmäßige Ausführungsform ist dadurch gekennzeichnet, daß die Gewindeaufnahmen für die Spangewindespindeln in einem Flansch der Stellstange angeordnet und die Stellräder und die Spanngewindespindeln an einem Flansch der Arbeitsspindel gelagert sind, wobei die Stellräder in einer Verzahnung mit an den Spanngewindespindeln drehfesten Zahnritzeln kämmen, die ebenso wie die Stellräder beidseits des Flansches der Arbeitsspindel angeordnet sind. Am besten weisen die Stellräder je einen innenliegenden Zahnkranz auf, mit dem die Zahnritzel im Eingriff stehen.

Ein weiteres wichtiges Erfindungsmerkmal, das einen vorteilhaften Getriebeaufbau ermöglicht, besteht darin, daß das Umlauf-Ausgleichsgetriebe als Kegelrad-Differentialgetriebe ausgebildet ist, bei dem die vom Stellmotor über ein Antriebsglied eingeleitete Drehbewegung über zwei durch mindestens ein Ausgleichsrad gegenläufig verbundene Abtriebsräder ausgeleitet wird, die mit je einem der Stellräder in Drehverbindung stehen, wobei in der Drehverbindung zwischen einem der Abtriebsräder und dem entsprechenden Stellrad eine Umkehr des Drehsinns derart erfolgt, daß dieses Abtriebsrad und das Stellrad zueinander gegensinnig umlaufen.

Vorzugsweise sind zwei mit den Stellrädern trieblich verbundene und mit ihnen jeweils gleichsinnig umlaufende Zwischenräder vorgesehen, von welchen eines direkt und das andere über ein den Drehsinn umkehrendes Getriebe mit je einem der Abtriebsräder verbunden ist, so daß das Zwischenrad und das Abtriebsrad, die über das den Drehsinn umkehrende Getriebe verbunden sind, gegensinnig zueinander umlaufen.

Die Stellräder können mit ihrem Zwischenrad jeweils durch einen Zahnriemen verbunden sein. Zweckmäßig sind die Abtriebsräder und die Zwischenräder koaxial angeordnet und zusammen mit den Getriebegliedern des den Drehsinn umkehrenden Getriebes an einem stationären Getriebegehäuse gelagert, das die Abtriebsräder und das Antriebsglied mit den am Antriebsglied gelagerten, zwischen den Abtriebsrädern laufenden Ausgleichsrädern umgibt, während die Zwischenräder axial nebeneinander auf derselben Seite außerhalb des Getriebehäuses angeordnet sind. Im übrigen empfiehlt es sich, die Anordnung so zu treffen, daß die Abtriebsräder axial einander gegenüberliegend mit voneinander abgewandten Achsstümpfen in der Wandung des Getriebegehäuses gelagert sind, daß in den hohlen Achsstümpfen beider Abtriebsräder eine vom Stellmotor betätigte, das Antriebsglied drehfest tragende Antriebswelle gelagert ist, wobei das Antriebsglied radial zur Antriebswelle gerichtete, die Ausgleichsräder lagernde Achszapfen aufweist, und daß das Zwischenrad, das über das den Drehsinn umkehrende Getriebe mit seinem Abtriebsrad verbunden ist, drehbar auf dem Achsstumpf des anderen Abtriebsrades gelagert ist, auf dem drehfest das zweite Zwischenrad sitzt. Zweckmäßig besitzen die Abtriebsräder, die Zwischenräder und die Stellräder jeweils unter sich gleichen Triebdurchmesser, so daß sie jeweils gleich große Drehzahlen bzw. Drehwinkel aufweisen.

Der Stellmotor kann zur einfachen Kraftübertragung auf das Antriebsglied des Ausgleichsgetriebes ein Drehfeldmagnet mit einem stationären Stator und mit einem mit der Antriebswelle des Ausgleichsgetriebes in Drehverbindung stehenden Rotor sein, wobei aber, um es nochmals zu betonen, der Rotor auch bei der Übertragung des Stelldrehmomentes nicht an der Rotation der Arbeitsspindel teilnimmt.

Im folgenden wird die Erfindung an einem in der Zeichnung dargestellten Ausführungsbeispiel näher erläutert; es zeigen:
Fig. 1 einen Axialschnitt durch eine Vorrichtung nach der Erfindung,
Fig. 2 eine Stirnansicht eines Teils des Gegenstandes der Fig. 1 in Richtung des in Fig. 1 eingetragenen Pfeiles II.

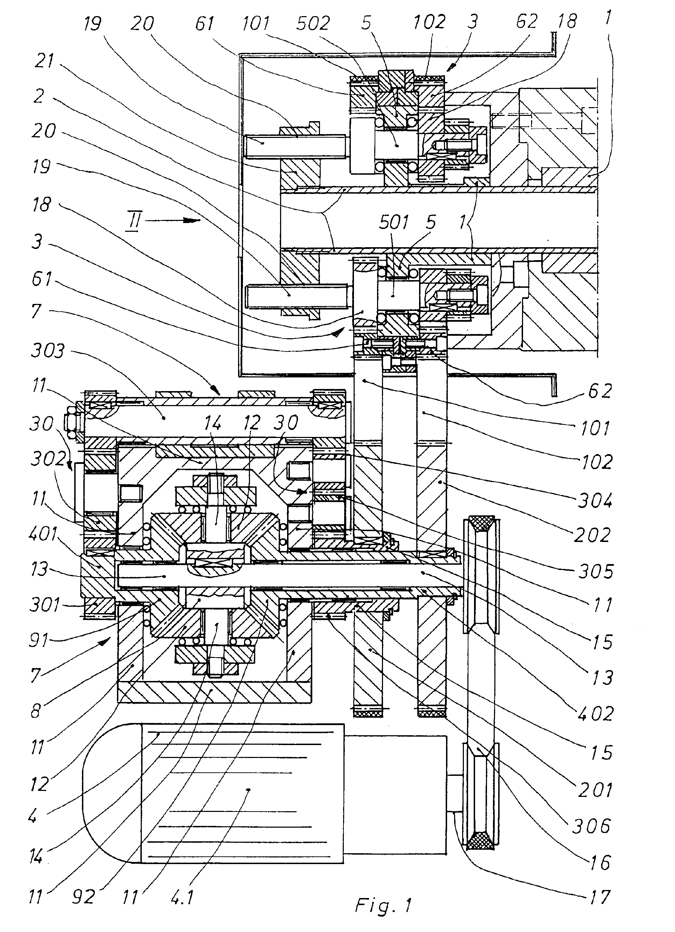

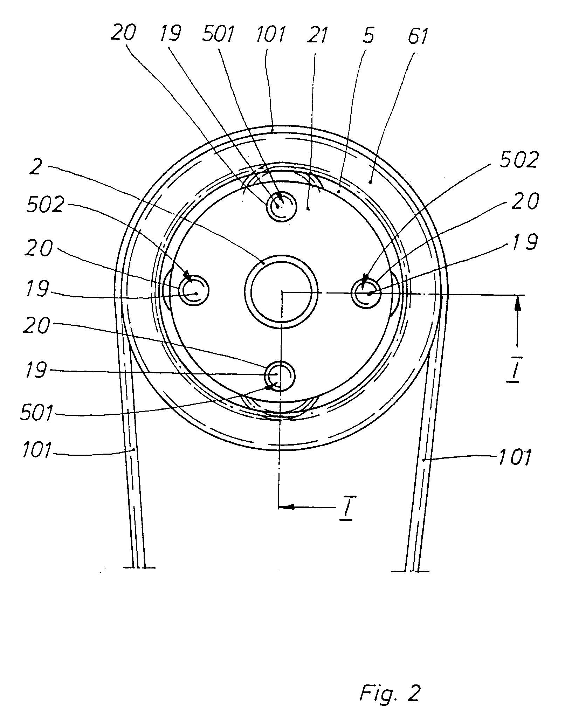

Die in Fig. 2 eingetragene Schnittlinie I-I entspricht dem in Fig. 1 gezeigten Axialschnitt.

In der Zeichnung ist die hohle Antriebsspindel 1 einer im übrigen nicht dargestellten Werkzeugmaschine nur teilweise wiedergegeben, insbesondere ohne ihre Lager im Maschinengestell und ohne die die Arbeitsspindel in Drehung versetzende Antriebseinrichtung. In der Arbeitsspindel 1 ist axial verschiebbar eine hohle Stellstange 2 geführt, die mit Hilfe eines allgemein mit 3 bezeichneten Bewegungswandlungssystems axial in der Arbeitsspindel 1 verstellt werden kann, um beispielsweise die Backen eines am Kopf der Arbeitsspindel 1 sitzenden, nicht dargestellten Spannfutters zu verstellen. Das gesamte Bewegungswandlungssystem 3 ist an der Arbeitsspindel 1 mitumlaufend angeordnet und wird von einem stationär angeordneten Stellmotor 4 betätigt. Es besitzt zwei an einem Flansch 5 der Arbeitsspindel 1 koaxial und drehbar gelagerte Stellräder 61, 62, die zur Betätigung des Bewegungswandlungssystems 3 in entgegengesetzten Drehrichtungen relativ zueinander verdreht werden müssen. Dazu ist zwischen den Stellrädern 61, 62 und dem Stellmotor 4 ein allgemein mit 7 bezeichnetes Ausgleichsgetriebe oder Differentialgetriebe angeordnet, bei dem die vom Stellmotor 4 über ein Antriebsglied 8 eingeleitete Drehbewegung über zwei Abtriebsräder 91, 92 ausgeleitet wird, wobei die Stellräder 61, 62, die Abtriebsräder 91, 92 und das Antriebsglied 8 achsenparallel angeordnet sind. Die Abtriebsräder 91, 92 stehen mit je einem der Stellräder 61, 62 in Drehverbindung, wobei in der Drehverbindung zwischen dem Abtriebsrad 91 und dem entsprechenden Stellrad 61 eine Umkehr des Drehsinns derart erfolgt, daß dieses Abtriebsrad 91 und das Stellrad 61 zueinander gegensinnig umlaufen. Im einzelnen sind die beiden Stellräder 61, 62 über eine Außenverzahnung und Zahnriemen 101, 102 mit ebenfalls am äußeren Umfang verzahnten, mit den Stellrädern 61, 62 achsenparallel und jeweils gleichsinnig umlaufenden Zwischenrädern 201, 202 verbunden. Das eine Zwischenrad 202 ist direkt mit dem Abtriebsrad 92, das andere Zwischenrad 201 über ein den Drehsinn umkehrendes Getriebe 30 mit dem anderen Abtriebsrad 9 derart verbunden, daß dieses Zwischenrad 201 und das Abtriebsrad 91 gegensinnig zueinander umlaufen. Die Abtriebsräder 91, 92 und die Zwischenräder 201, 202 sind koaxial angeordnet und zusammen mit den Getriebegliedern 301 bis 306 des den Drehsinn umkehrenden Getriebes 30 an einem stationären Getriebegehäuse 11 gelagert, das die Abtriebsräder 91, 92 und das Antriebsglied 8 des Ausgleichsgetriebes 7 mit den am Antriebsglied 8 gelagerten, zwischen den Abtriebsrädern 91, 92 laufenden Ausgleichsrädern 12 umgibt. Die Zwischenräder 201, 202 sind auf derselben Seite außerhalb des Getriebegehäuses 11 angeordnet. Die Abtriebsräder 91, 92 liegen sich axial einander gegenüber und sind mit voneinander abgewandten Achsstümpfen 401, 402 in der Wandung des Getriebegehäuses 11 gelagert. In den hohlen Achsstümpfen 401, 402 beider Abtriebsräder 91, 92 ist eine vom Stellmotor 4 betätigte, das Antriebsglied 8 drehfest tragende Antriebswelle 13 gelagert. Das Antriebsglied 8 besitzt radial zur Antriebswelle 13 gerichtete, die Ausgleichsräder 12 lagernde Achszapfen 14, wobei in Fig. 1 nur zwei dieser Achszapfen 14 und Ausgleichsräder 12 zu erkennen sind. Das Zwischenrad 201, das über das den Drehsinn umkehrende Getriebe 30 mit seinem Abtriebsrad 91 verbunden ist, sitzt drehbar auf dem Achsstumpf 402 des anderen Abtriebsrades 92, wobei auf diesem Achsstumpf 402 drehfest das zweite Zwischenrad 202 sitzt. Das den Drehsinn umkehrende Getriebe 30 überträgt die Drehbewegung des Abtriebsrades 91 auf die axial gegenüberliegende Seite des Getriebegehäuses 11, so daß die beiden Zwischenräder 201, 202 und entsprechend die Stellräder 61, 62 axial nahe beieinander angeordnet werden können. Im einzelnen umfaßt das den Drehsinn umkehrende Getriebe 30 ein Zahnrad 301 auf dem Achsstumpf 401 des Abtriebsrades 91, dessen Bewegung über ein eingelegtes Zahnrad 302 auf eine zur Antriebswelle 13 des Ausgleichsgetriebes 7 parallel im Getriebegehäuse 11 gelagerte Getriebewelle 303 übertragen wird. Diese Getriebewelle 303 erstreckt sich von der einen zur anderen Stirnwand des Getriebegehäuses 11, wo ihre Drehbewegung über zwei miteinander kämmende Zahnräder 304, 305 auf eine das Zwischenrad 201 tragende Hülse 15 übertragen wird, die mit einer Außenverzahnung 306 mit dem Zahnrad 305 im Eingriff steht und drehbar auf dem Achsstumpf 402 des Abtriebsrades 92 und Zwischenrades 202 gelagert ist. Die Abtriebsräder 91, 92, die Zwischenräder 201, 202 und die Stellräder 61, 62 besitzen jeweils unter sich gleichen Triebdurchmesser. Der Stellmotor 4 ist ein Drehfeldmagnet mit einem stationären Stator 4.1 und einem mit der Antriebswelle 13 des Ausgleichsgetriebes 7 über einen Zahnriemen in Drehverbindung stehenden Rotor mit einer vom Rotor betriebenen Abtriebswelle. An dem Flansch 5 der Arbeitsspindel 1 sind achsenparallel und exzentrisch zur Achse der Arbeitsspindel 1 angeordnete Spanngewindespindeln 501, 502 drehbar und axial unverschiebbar gelagert. Diese Spanngewindespindeln stehen über je ein Zahnritzel 18 mit jeweils einem der Stellräder 61, 62 in Triebverbindung, wozu die Stellräder 61, 62 auf ihrer Innenseite eine Verzahnung aufweisen, die mit den Zahnritzeln 18 kämmt. Die Spanngewindespindeln 501, 502 besitzen je einen Spanngewindezapfen 19 mit einem Spanngewinde 20. Der Spanngewindezapfen 19 läuft in Gewindeaufnahmen, die in einem Flansch 21 der Stellstange 2 vorgesehen sind. Alle Spanngewindespindeln 501, die mit demselben Stellrad 61 im Eingriff stehen, besitzen gleichen Gewindesinn ihres Spanngewindes 20, aber umgekehrten Gewindesinn wie die mit dem anderen Stellrad 62 in Triebverbindung stehenden Spanngewindespindeln 502. Jeweils zwei der Spanngewindespindeln 501 oder 502 mit gleichem Gewindesinn stehen sich diametral an der Arbeitsspindel 1 gegenüber, während in Umfangsrichtung der Arbeitsspindel 1 die Spanngewindespindeln 501 bzw. 502 mit engegengesetztem Drehsinn abwechseln. Die Stellräder 61, 62 und die auf den Spanngewindespindeln 501, 502 sitzenden Zahnritzel 18 sind beidseits des Flansches 5 angeordnet.

Zur axialen Verstellung der Stellstange 2 werden die beiden Stellräder 61, 62 relativ zueinander entgegengesetzt verdreht, wobei die auf die Stellräder einwirkenden Stelldrehmomente im Drehsinn entgegengesetzt, im übrigen aber gleich groß sind. Die Arbeitsspindel 1 bleibt von diesen Stelldrehmomenten unbelastet. Die Spanngewindespindeln 501, die vom einen Stellrad 61 angetrieben werden, bewegen sich entsprechend mit entgegengesetztem Drehsinn wie die vom anderen Stellrad 62 angetriebenen Gewindespindeln 502. Da aber der Gewindesinn der Spanngewinde 20 an den Spanngewindespindeln 501 und 502 entgegengesetzt ist, ergibt die Verdrehung aller Spanngewindespindeln trotz verschiedenen Drehsinns die gleiche Axialverstellung der Stellstange 2.

Läuft die Arbeitsspindel 1 um, dreht sich mit ihr das gesamte Bewegungswandlungssystem 3, insbesondere also drehen sich mit der Arbeitsspindel 1 auch die beiden Stellräder 61, 62, und zwar beide gleichsinnig. Diese gleichsinnige Drehbewegung überträgt sich auf die Zwischenräder 201, 202, die somit ebenfalls gleichsinnig umlaufen. Die mit den Zwischenrädern verbundenen Abtriebsräder 91, 92 des Ausgleichsgetriebes 7 rotieren dagegen wegen des Getriebes 30 in entgegengesetzten Drehrichtungen, so daß die Ausgleichsräder 12 zwar um ihre Achszapfen 14 rotieren, das Antriebsglied 8 des Ausgleichsgetriebes 7 aber mit der Antriebswelle 13 still stehen bleibt, so daß auch der Rotor des Stellmotors 4 keine Mitdrehung erfährt. Wird der Motor 4 beaufschlagt, führt dies zu einer Verdrehung des Rotors, der Antriebswelle 13 und des Antriebsgliedes 8, was eine gleichsinnige Mitdrehung beider Abtriebsräder 91, 92 ergibt. Da aber der Drehsinn des Abtriebsrades 91 bei der Übertragung seiner Drehbewegung auf das Zwischenrad 201 umgekehrt wird, erfahren die beiden Zwischenräder 201, 202 und mit ihnen die beiden Stellräder 61, 62 relativ zueinander eine Verdrehung im entgegengesetzten Drehsinn, was in der schon beschriebenen Weise eine Axialverstellung der Stellstange 2 ergibt. Diese Betätigung des Bewegungswandlungssystems 3 ist unabhängig davon, ob die Arbeitsspindel 1 und mit ihr die Stellräder 61, 62 und die Zwischenräder 201, 202 angetrieben sind oder ob sie ruhen.

## Patentansprüche

1. Vorrichtung zum Erzeugen eines Stelldrehmomentes für ein Bewegungswandlungssystem (3), insbesondere zum Verstellen der Backen eines Futters oder der von ihnen ausgeübten Spannkraft, mit einer zum Umlauf antreibbaren Arbeitsspindel (1) einer Werkzeugmaschine und einer in der hohlen Arbeitsspindel verstellbar angeordneten Stellstange (2), wobei das Bewegungswandlungssystem (3) an der Arbeitsspindel (1) mitumlaufend angeordnet ist, zwei koaxial zur Arbeitsspindel (1) angeordnete, zur Betätigung des Bewegungswandlungssystems (3) in entgegengesetzten Drehrichtungen relativ zueinander verdrehbare Stellräder (61, 62) vorgesehen sind und im Antriebsstrang zwischen diesen Stellrädern (61, 62) und einem stationär angeordneten Stellmotor (4) ein Umlauf-Ausgleichsgetriebe (7) angeordnet ist, das die Drehbewegung oder das Drehmoment des Stellmotors (4) auf die beiden Stellräder (61, 62) verzweigt, dadurch gekennzeichnet, daß die relativ zur Arbeitsspindel (1) verdrehbaren Stellräder (61, 62) in Triebverbindung mit an der Arbeitsspindel (1) drehbar und axial unverschiebbar gelagerten, achsenparallel und exzentrisch zur Achse der Arbeitsspindel (1) angeordneten Spanngewindespindeln (501, 502) stehen, die mit ihrem Spanngewinde (20) in an der axial verstellbaren Stellstange (2) vorgesehenen Gewindeaufnahmen laufen, wobei die mit dem einen Stellrad (61) in Triebverbindung stehenden Spanngewindespindeln (501) umgekehrten Gewindesinn wie die mit dem anderen Stellrad (62) in Triebverbindung stehenden Spanngewindespindeln (502) aufweisen.

2. Vorrichtung nach Anspruch 1, dadurch gekennzeichnet, daß jeweils zwei der Spanngewindespindeln (501 oder 502) mit gleichem Gewindesinn sich diametral an der Arbeitsspindel (1) gegenüberstehen und daß in Umfangsrichtung der Arbeitsspindel (1) die Spanngewindespindeln (501, 502) mit engegengesetztem Drehsinn abwechseln.

3. Vorrichtung nach Anspruch 1 oder 2, dadurch gekennzeichnet, daß die Gewindeaufnahmen für die Spanngewindespindeln (501, 502) in einem Flansch (21) der Stellstange (2) angeordnet und die Stellräder (61, 62) und die Spanngewindespindeln (501, 502) an einem Flansch (5) der Arbeitsspindel (1) gelagert sind, wobei die Stellräder (61, 62) in einer Verzahnung mit an den Spanngewindespindeln (501, 502) drehfesten Zahnritzeln (18) kämmen, die ebenso wie die Stellräder (61, 62) beidseits des Flansches (5) angeordnet sind.

4. Vorrichtung nach Anspruch 3, dadurch gekennzeichnet, daß die Stellräder (61, 62) je einen innenliegenden Zahnkranz aufweisen, mit dem die Zahnritzel (18) im Eingriff stehen.

5. Vorrichtung nach einem der Ansprüche 1 bis 4, dadurch gekennzeichnet, daß das Umlauf-Ausgleichsgetriebe (7) als Kegelrad-Differentialgetriebe ausgebildet ist, bei dem die vom Stellmotor (4) über ein Antriebsglied (8) eingeleitete Drehbewegung über zwei durch mindestens ein Ausgleichsrad (12) gegenläufig verbundene Abtriebsräder (91, 92) ausgeleitet wird, die mit je einem der Stellräder (61, 62) in Drehverbindung stehen, wobei in der Drehverbindung zwischen einem der Abtriebsräder (91) und dem entsprechenden Stellrad (61) eine Umkehr des Drehsinns derart erfolgt, daß dieses Abtriebsrad (19) und das Stellrad (61) zueinander gegensinnig umlaufen.

6. Vorrichtung nach Anspruch 5, dadurch gekennzeichnet, daß zwei mit den Stellrädern (61, 62) trieblich verbundene und mit ihnen jeweils gleichsinnig umlaufende Zwischenräder (201, 202) vorgesehen sind, von welchen eines direkt und das andere über ein den Drehsinn umkehrendes Getriebe (30) mit je einem der Abtriebsräder (91 bzw. 92) verbunden ist.

7. Vorrichtung nach Anspruch 6, dadurch gekennzeichnet, daß die Abtriebsräder (91, 92) und die Zwischenräder (201, 202) koaxial angeordnet und zusammen mit den Getriebegliedern (301 bis 306) des den Drehsinn umkehrenden Getriebes (30) an einem stationären Getriebegehäuse (11) gelagert sind, das die Abtriebsräder (91, 92) und das Antriebsglied (8) mit den am Antriebsglied (8) gelagerten zwischen den Abtriebsrädern (91, 92) umlaufenden Ausgleichsrädern (12) umgibt.

8. Vorrichtung nach Anspruch 7, dadurch gekennzeichnet, daß die Abtriebsräder (91, 92) axial einander gegenüber liegend mit voneinander abgewandten Achsstümpfen (401, 402) in der Wandung des Getriebegehäuses (11) gelagert sind, daß in den hohlen Achsstümpfen (401, 402) beider Abtriebsräder (91, 92) eine vom Stellmotor (4) betätigte, das Antriebsglied (8) drehfest tragende Antriebswelle (13) gelagert ist, wobei das Antriebssglied (8) radial zur Antriebswelle (13) gerichtete, die Ausgleichsräder (12) lagernde Achszapfen (14) aufweist, und daß das Zwischenrad (201), das über das den Drehsinn umkehrende Getriebe (30) mit seinem Abtriebsrad (91) verbunden ist, drehbar auf dem Achsstumpf (402) des anderen Abtriebsrades (92) gelagert ist, auf dem drehfest das zweite Zwischenrad (202) sitzt.

9. Vorrichtung nach einem der Ansprüche 6 bis 8, dadurch gekennzeichnet, daß die Abtriebsräder (91, 92), die Zwischenräder (201, 202) und die Stellräder (101, 102) jeweils unter sich gleichen Triebdurchmesser aufweisen.

10. Vorrichtung nach einem der Ansprüche 6 bis 9, dadurch gekennzeichnet, daß der Stellmotor (4) ein Drehfeldmagnet mit einem stationären Stator (4.1) und einem mit der Antriebswelle (13) des Ausgleichsgetriebes (7) in Drehverbindung stehenden Rotor ist.

## Claims

1. Apparatus for producing an adjusting torque for a motion conversion system (3), in particular for adjusting the jaws of a chuck or the clamping force applied by the chuck jaws, comprising a working spindle (1), which can be driven in rotation, of a machine tool, and an adjusting bar (2) which is displaceable in the hollow working spindle, wherein the motion conversion system (3) is arranged for joint rotary movement on the working spindle (1), there are provided two adjusting wheels (61, 62) which are arranged coaxially relative to the working spindle (1) and which are rotatable relative to each other in opposite directions of rotation for actuation of the motion conversion system (3) and disposed in the drive line between those adjusting wheels (61, 62) and a stationarily arranged adjusting motor (4) is a rotary compensating transmission (7) which branches the rotary motion or the torque of the adjusting motor (4) to the two adjusting wheels (61, 62), characterised in that the adjusting wheels (61, 62) which are rotatable relative to the working spindle (1) are drivingly connected to screwthreaded clamping spindles (501, 502) which are mounted rotatably and axially immovably on the working spindle (1) and which are arranged with their axes parallel to and in eccentric relationship with the axis of the working spindle (1) and which run with their clamping screwthread (20) in screwthread receiving means which are provided on the axially displaceable adjusting bar (2), wherein the screwthreaded clamping spindles (501) which are drivingly connected to the one adjusting wheel (61) have screwthreads of opposite hand to the screwthreaded clamping spindles (502) which are drivingly connected to the other adjusting wheel (62).

2. Apparatus according to claim 1 characterised in that a respective pair of the screwthreaded clamping spindles (501 or 502) with a screwthread of the same hand are disposed in diametrally opposite relationship at the working spindle (1) and that the screwthreaded clamping spindles (501, 502) which rotate in opposite directions alternate in the peripheral direction of the working spindle (1).

3. Apparatus according to claim 1 or claim 2 characterised in that the screwthread receiving means for the screwthreaded clamping spindles (501, 502) are disposed in a flange (21) on the adjusting bar (2) and the adjusting wheels (61, 62) and the screwthreaded clamping spindles (501, 502) are mounted on a flange (5) of the working spindle (1), wherein the adjusting wheels (61, 62) mesh in a tooth configuration with pinions (18) which are non-rotatable on the screwthreaded clamping spindles (501, 502) and which like the adjusting wheels (61, 62) are arranged on both sides of the flange (5).

4. Apparatus according to claim 3 characterised in that the adjusting wheels (61, 62) each have an inwardly disposed ring gear with which the pinions (18) are in engagement.

5. Apparatus according to one of claims 1 to 4 characterised in that the rotary compensating transmission (7) is in the form of a bevel gear differential transmission in which the rotary movement which is inputted from the adjusting motor (4) by way of a drive member (8) is outputted by way of two driven wheels (91, 92) which are connected in opposite relationship by at least one compensating wheel (12) and which are each rotatably connected to a respective one of the adjusting wheels (61, 62), wherein there is a reversal in the direction of rotation in the rotary connection between one of the driven wheels (91) and the corresponding adjusting wheel (61) in such a way that said driven wheel (91) and the adjusting wheel (61) rotate in mutually opposite directions.

6. Apparatus according to claim 5 characterised in that there are provided two intermediate wheels (201, 202) which are drivingly connected to the adjusting wheels (61, 62) and which each rotate in the same respective direction of rotation therewith, of which intermediate wheels one is connected directly and the other is connected by way of a transmission (30) for reversing the direction of rotation, to respective ones of the driven wheels (91 and 92 respectively).

7. Apparatus according to claim 6 characterised in that the driven wheels (91, 92) and the intermediate wheels (201, 202) are arranged coaxially and are mounted together with the transmission members (301 to 306) of the transmission (30) for reversing the direction of rotation on a stationary transmission housing (11) which encloses the driven wheels (91, 92) and the drive member (8) with the compensating wheels (12) which are mounted on the drive member (8) and which rotate between the driven wheels (91, 92).

8. Apparatus according to claim 7 characterised in that the driven wheels (91, 92) are mounted in axially mutually opposite relationship with shaft trunnions (401, 402) which are remote from each other, in the wall of the transmission housing (11), that mounted in the hollow shaft trunnions (401, 402) of both driven wheels (91, 92) is a drive shaft (13) which is actuated by the adjusting motor (4) and which non-rotatably carries the drive member (8), wherein the drive member (8) has shaft portions (14) which are directed radially relative to the drive shaft (13) and which support the compensating wheels (12) and that the intermediate wheel (201) which is connected by way of the transmission (30) which reverses the direction of rotation to its driven wheel (91) is mounted rotatably on the shaft trunnion (402) of the other driven wheel (92), on which the second intermediate wheel (202) is non-rotatably carried.

9. Apparatus according to one of claims 6 to 8 characterised in that the driven wheels (91, 92), the intermediate wheels (201, 202), and the adjusting wheels (101, 102) have drive diameters which are respectively the same as each other.

10. Apparatus according to one of claims 6 to 9 characterised in that the adjusting motor (4) is a rotating field magnet with a stationary stator (4.1) and a rotor which is rotatably connected to the drive shaft (13) of the compensating transmission (7).

## Revendications

1. Dispositif pour la génération d'un couple de commande pour un système de conversion de mouvement (3), en particulier pour l'ajustement des mâchoires d'un mandrin ou de la force de serrage exercée par celles-ci, comprenant un arbre moteur (1) d'une machine-outil pouvant être entraîné en rotation et une barre de réglage (2) disposée de manière mobile dans l'arbre moteur creux, le système de conversion de mouvement (3) étant monté de manière solidaire en rotation sur l'arbre moteur (1), deux roues de réglage (61, 62) disposées coaxialement par rapport à l'arbre moteur (1) pouvant être tournées l'une par rapport à l'autre dans des directions de rotation opposées pour actionner le système de conversion de mouvement (3), et un engrenage différentiel planétaire (7) qui branche le mouvement de rotation ou le couple de rotation du moteur de positionnement (4) sur les deux roues de réglage (61, 62), étant inséré dans la branche d'entraînement entre ces roues de réglage (61, 62) et un moteur de positionnement (4) stationnaire **caractérisé par le fait** que les roues de réglage (61, 62) qui peuvent tourner par rapport à l'arbre moteur (1) sont couplées en entraînement avec des broches de serrage filetées (501, 502) montées sur l'arbre moteur (1) de manière tournante et axialement immobile, parallèlement et excentrées par rapport à l'axe de l'arbre moteur (1), lesquelles tournent avec leur filetage de serrage (20) dans les logements filetés prévus sur la broche de réglage (2) déplaçable dans le sens axial, les broches de serrage filetées (501) couplées en entraînement avec l'une des roues de réglage (61) présentant un filetage opposé à celui des broches de serrage filetées (502) couplées avec l'autre roue de réglage (62).

2. Dispositif selon la revendication 1, caractérisé par le fait que respectivement deux broches de serrage (501 ou 502) filetées dans le même sens se trouvent diamétralement opposées sur l'arbre moteur (1), et que dans le sens circonférentiel de l'arbre moteur (1), les broches de serrage filetées (501, 502) avec des sens de rotation opposés alternent.

3. Dispositif selon l'une des revendications 1 ou 2, caractérisé par le fait que les logements filetés pour la réception des broches de serrage filetées (501, 502) sont disposés dans une bride (21) de la barre de réglage (2) et que les roues de réglage (61, 62) et les broches de serrage filetées (501, 502) sont montées sur une bride (5) de l'arbre moteur (1), les roues de réglage (61, 62) coopérant dans une denture avec des pignons (18) solidaires en rotation avec les broches de serrage filetées (501, 502), lesquels pignons sont montés, tout comme les roues de réglage (61, 62), des deux côtés de la bride (5).

4. Dispositif selon la revendication 3, caractérisé par le fait que les roues de réglage (61, 62) présentent chacune une couronne dentée intérieure dans lesquelles s'engrènent les pignons (18).

5. Dispositif selon l'une des revendications 1 à 4, caractérisé par le fait que l'engrenage différentiel planétaire (7) est conformé en engrenage différentiel à roues coniques dans lequel le mouvement de rotation introduit par le moteur de positionnement (4) par l'intermédiaire d'un organe d'entraînement (8), est transmis par l'intermédiaire de deux roues de sortie (91, 92) couplées en sens opposé par au moins une roue compensatrice (12), qui sont couplées en rotation avec respectivement l'une des roues de réglage (61, 62), une inversion du sens de rotation se produisant dans le couplage en rotation entre l'une des roues de sortie (91) et la roue de réglage correspondante (61) de telle façon que ladite roue de sortie (91) et la roue de réglage (61) tournent dans des sens opposés l'une par rapport à l'autre.

6. Dispositif selon la revendication 5, caractérisé par le fait qu'il comprend deux roues intermédiaires (201, 202) couplées avec les roues de réglage (61, 62) et tournant respectivement avec celles-ci dans le même sens, qui sont couplées, l'une directement et l'autre par l'intermédiaire d'un engrenage (30) inversant le sens de rotation, avec respectivement l'une des roues de sortie (91 ou 92).

7. Dispositif selon la revendication 6, caractérisé par le fait que les roues de sortie (91, 92) et les roues intermédiaires (201, 202) sont disposées coaxialement et montées conjointement avec les éléments d'engrenage (301 à 306) de l'engrenage (30) inversant le sens de rotation, sur une boîte d'engrenages (11) stationnaire qui entoure les roues de sortie (91, 92) et l'organe d'entraînement (8) avec les roues compensatrices (12) montées sur l'organe d'entraînement (8) et tournant entre les roues de sortie (91, 92).

8. Dispositif selon la revendication 7, caractérisé par le fait que les roues de sortie (91, 92) sont montées axialement en face l'une de l'autre, avec des tourillons (401, 402) opposés, dans la paroi de la boîte d'engrenages (11), que dans les tourillons (401, 402) creux des deux roues de sortie (91, 92) est monté un arbre moteur (13) commandé par le moteur de positionnement (4) et portant de manière rigide en rotation l'organe d'entraînement (8), ledit organe d'entraînement (8) comportant des tourillons (14) orientés radialement par rapport à l'arbre moteur (13) et supportant les roues compensatrices (12), et que la roue intermédiaire (201) qui, par l'intermédiaire de l'engrenage d'inversion du sens de rotation (30) est couplée avec sa roue de sortie (91), est montée de manière tournante sur le tourillon (402) de l'autre roue de sortie (92) qui porte de manière rigide en rotation la seconde roue intermédiaire (202).

9. Dispositif selon l'une des revendications 6 à 8, caractérisé par le fait que les roues de sortie (91, 92), les roues intermédiaires (201, 202) et les roues de réglage (101, 102) présentent respectivement entre elles le même diamètre d'entraînement.

10. Dispositif selon l'une des revendications 6 à 9, caractérisé par le fait que le moteur de positionnement (4) est un inducteur à champ magnétique tournant avec un stator fixe (4.1) et un rotor couplé en rotation avec l'arbre moteur (13) de l'engrenage différentiel (7).
